# EUROPÄISCHE PATENTANMELDUNG

(11) **EP 1 138 960 A1**
(43) Veröffentlichungstag der Anmeldung: **04.10.2001**
(21) Anmeldenummer: 01106977.0
(22) Anmeldetag: 21.03.2001
(51) Int. Cl.: F16B 12/12, A47B 47/04

(54) **Stützglied**

(30) Priorität: 30.03.2000 DE 20005893 U
(71) Anmelder: Joh. Schilling KG, 88477 Schwendi (DE)
(72) Erfinder: Schilling, Johannes Adolf, 88477 Schwendi (DE)
(74) Vertreter: Engelhardt, Volker

(57) **Zusammenfassung**

Bei einem Stützglied (1) zur Halterung eines oder mehrerer plattenförmiger Bauteile (2) an einer oder mehreren Stirnseiten, insbesondere zur Abstützung von vorgefertigten Wandplatten aus Holz, die jeweils mittels einer angeformten Feder (3) oder unmittelbar in dem balkenförmigen Stützglied (1) arretiert sind,
soll die Montage der Wandtafeln bei einfacher Ausrichtung in einem erheblichen Maße erleichtert werden. Außerdem sollen dabei Beschädigungen weitgehend ausgeschlossen sein und des weiteren soll eine toleranzfreie feste Einspannung der Wandtafeln oder anderer Bauteile bewerkstelligt werden können.
Dies wird dadurch erreicht, daß das Stützglied (1) im Bereich des in dieses eingreifenden Teils (Feder 3) des zu arretierenden Bauteils (2) in Längsrichtung unterteilt ausgebildet ist und dass die beiden Teile (12, 15) des Stützgliedes (1) mittels lösbarer Verbindungsglieder (18) miteinander verspannt sind.

## Beschreibung

Die Erfindung bezieht sich auf ein Stützglied zur Halterung eines oder mehrerer plattenförmiger Bauteile an einer oder mehreren Stirnseiten, insbesondere zur Abstützung von vorgefertigten Wandplatten aus Holz, die jeweils mittels einer angeformten Feder oder unmittelbar in dem balkenförmigen Stützglied arretiert sind.

Stützglieder dieser Art sind jeweils mit einer Längsnut versehen, in die die Wandplatten mittels angearbeiteten Federn eingreifen. Beim Erstellen einer Wand müssen somit die diese bildenden Wandtafeln über eine Wange des Stützgliedes angehoben und sodann lageorientiert in die Nut eingeführt werden. Dies ist nicht nur aufwendig, sondern dabei können auch sowohl die Feder als auch die Kanten der Nut beschädigt werden, so dass mitunter ein Austausch dieser Bauteile unumgänglich ist. Des weiteren ist von Nachteil, dass eine feste Einspannung der Wandplatten in dem Stützglied nicht gegeben ist und dass keine Maßtoleranzen ausgeglichen werden können.

Aufgabe der Erfindung ist es daher, ein Stützglied der eingangs genannten Gattung zu schaffen, mittels dem die Montage der Wandtafeln bei einfacher Ausrichtung in einem erheblichen Maße erleichtert wird. Außerdem sollen dabei Beschädigungen weitgehend ausgeschlossen sein und des weiteren soll eine toleranzfreie feste Einspannung der Wandtafeln oder anderer Bauteile bewerkstelligt werden können.

Gemäß der Erfindung wird dies bei einem Stützglied der vorgenannten Art dadurch erreicht, dass das Stützglied im Bereich des in dieses eingreifenden Teils des zu arretierenden Bauteils in Längsrichtung unterteilt ausgebildet ist und dass die beiden Teile des Stützgliedes mittels lösbarer Verbindungsglieder miteinander verspannt sind.

Zweckmäßig ist es hierbei, das Stützglied mit einer oder mehreren zum Beispiel gegeneinander in der Höhe versetzten und von seitlichen Wangen eingeschlossenen Auflageflächen für das zu arretierende Bauteil zu versehen und im Eckbereich zwischen einer seitlichen Wange und der abgesetzten Auflagefläche sowie achssenkrecht zu dieser zu unterteilen.

Ferner ist es angebracht, das Stützglied mit auf dessen abgesetzter Abstützfläche angeordneten Beschlägen zur Fixierung des zu arretierenden Bauteils zu versehen, die als mit einer in das zu arretierende Bauteil eingesetzten metallischen Hülse zusammenwirkenden Federraste ausgebildet sein können, wobei die Federraste und die Hülse jeweils etwa in der Mitte des zu arretierenden Bauteils in das Stützglied sowie in das Bauteil eingesetzt sein sollte.

Wird ein Stützglied gemäß der Erfindung ausgebildet, so ist es ohne Schwierigkeiten möglich, zu montierende Wandtafeln oder ähnliche Bauteile auf dessen Stützflächen aufzusetzen und danach mit diesen zu verspannen. Ein Anheben der Wandtafeln über eine seitliche Wange des Stützgliedes und ein lageorientiertes Einführen in dessen Längsnut ist dabei nicht erforderlich, vielmehr können die einzelnen Wandtafeln unmittelbar auf der Stützfläche abgesetzt und aufgerichtet werden. Wird sodann das zweite Teil des Stützgliedes, das als Spannleiste wirkt, angebracht, sind die Wandtafeln fest in dem Stützglied eingespannt. Dabei können Fertigungstoleranzen ausgeglichen werden. Auch können im Bedarfsfall einzelne Wandtafeln nach dem Lösen der Spannleiste problemlos ausgebaut werden. Mit geringem Bauaufwand wird somit die Montage von aus einzelnen Wandtafeln zusammengesetzten Wänden in einem erheblichen Maße erleichtert.

In der Zeichnung ist ein Ausführungsbeispiel eines gemäß der Erfindung ausgebildeten unterteiltem Stützglied dargestellt, das nachfolgend im einzelnen erläutert ist. Hierbei zeigt:
- Figur 1: ein mit eingespannten Wandtafeln versehenes Stützglied in perspektivischer Darstellung,
- Figur 2: einen Schnitt nach der Linie II - II der Figur 1,
- Figur 3: einen Schnitt nach der Linie III - III der Figur 1 und
- Figur 4: eine Ausführungsvariante in einer Darstellung gemäß Figur 2.

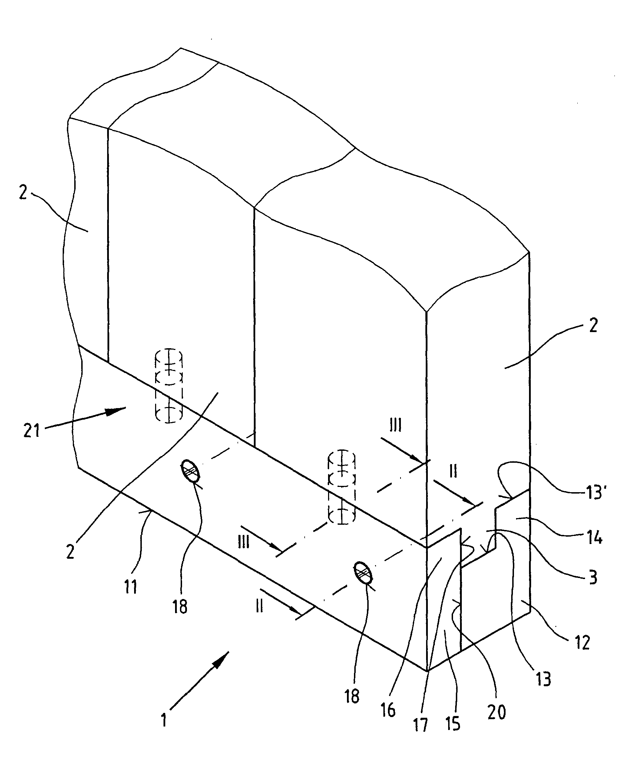

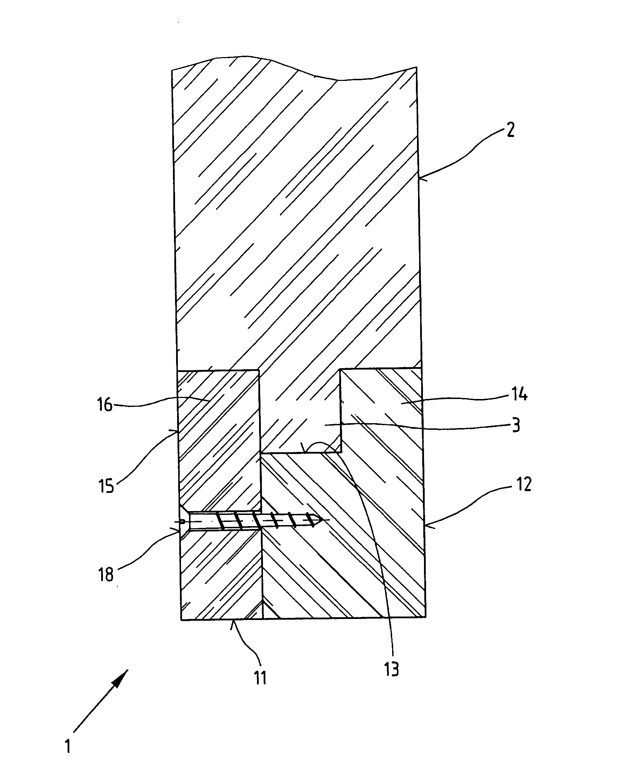

Das in den Figuren 1 bis 4 dargestellte und mit 1 bezeichnete Stützglied dient zur Halterung von Wandtafeln 2 oder ähnlichen Bauteilen an deren Stirnseite und besteht aus einem Balken 11, der in Längsrichtung unterteilt ist. Ein Teil des Balkens 11 ist als Auflager 12 mit in der Höhe abgesetzten Stützflächen 13, 13' und einer Wange 14 gestaltet, der andere Teil bildet dagegen eine Spannleiste 15, die mittels Schrauben 18 mit dem Auflager 12 lösbar verbunden ist. Die Trennfuge 20 zwischen dem Auflager 12 und der Spannleiste 15 ist im Eckbereich zwischen der Auflagefläche 13 und der sich an dieser anschließenden seitlichen Wange 16 der Spannleiste 15 vorgesehen. In dem Stützglied 1 ist somit eine Nut 17 gebildet, in die die Wandtafeln 2 mittels angeformter Feder 3 eingreifen.

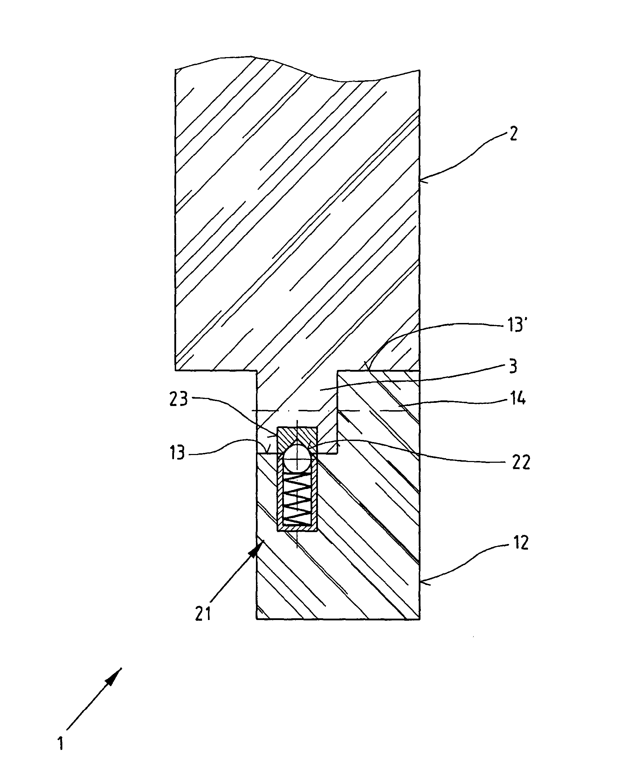

Die Montage der Wandtafeln 2 erfolgt in der Weise, dass diese nacheinander auf den Auflageflächen 13, 13' des Auflagers 12 aufgestellt werden. Dabei ist von Vorteil, dass in das Auflager 12 jeweils etwa mittig zu den einzelnen Wandtafeln 2 jeweils ein Beschlag 21 in Form einer Federraste 22 eingesetzt ist, die mit in den Wandtafeln 2 angeordneten Hülsen 23, wie dies inbesondere der Figur 3 zu entnehmen ist, zusammenwirken. Das Ausrichten der Wandtafeln 2 wird dadurch erleichtert. Wird sodann die Spannleiste 15 mittels der Schrauben 18 mit dem Auflager 12 verbunden, sind die Wandtafeln 2 fest in dem Stützglied 1 eingespannt.

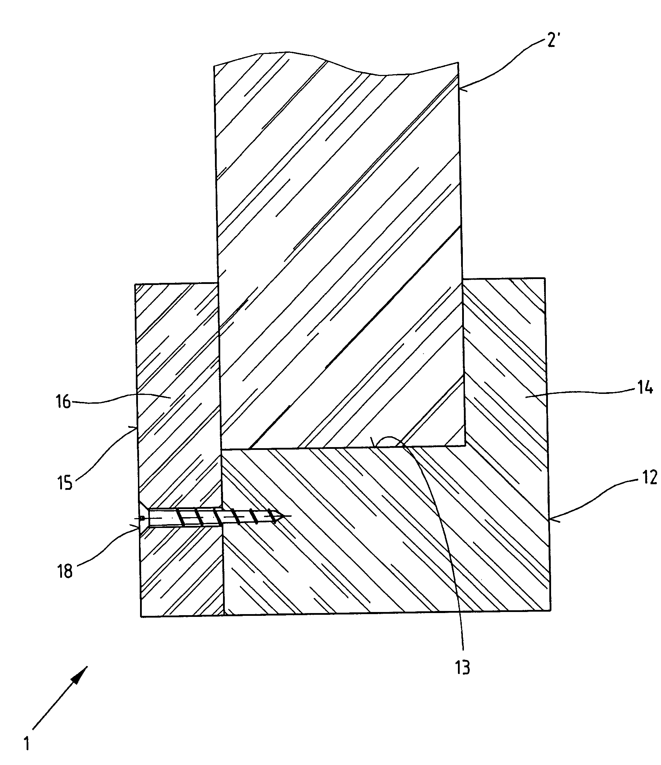

Gemäß der Ausführungsvariante nach Figur 4 können in dem Stützglied 1 auch Wandtafeln 2' eingespannt werden, an denen keine Federn angearbeitet sind. Die Wangen 14 und 16 des Auflagers 12 bzw. der Spannleiste 15 übergreifen in diesem Fall die Wandtafel 2'.

## Patentansprüche

1. Stützglied (1) zur Halterung eines oder mehrerer plattenförmiger Bauteile (2) an einer oder mehreren Stirnseiten, insbesondere zur Abstützung von vorgefertigten Wandplatten aus Holz, die jeweils mittels einer angeformten Feder (3) oder unmittelbar in dem balkenförmigen Stützglied (1) arretiert sind,
**dadurch gekennzeichnet,**
**daß** das Stützglied (1) im Bereich des in dieses eingreifenden Teils (Feder 3) des zu arretierenden Bauteils (2) in Längsrichtung unterteilt ausgebildet ist und dass die beiden Teile (12, 15) des Stützgliedes (1) mittels lösbarer Verbindungsglieder (18) miteinander verspannt sind.

2. Stützglied nach Anspruch 1,
**dadurch gekennzeichnet,**
**daß** das Stützglied (1) mit einer oder mehreren zum Beispiel gegeneinander in der Höhe versetzten und von seitlichen Wangen (14, 16) eingeschlossenen Auflageflächen (13, 13') für das zu arretierende Bauteil (2) versehen ist.

3. Stützglied nach Anspruch 1,
**dadurch gekennzeichnet,**
**daß** das Stützglied (11) im Eckbereich zwischen einer seitlichen Wange (16) und der abgesetzten Auflagefläche (13) sowie achssenkrecht zu dieser unterteilt ist.

4. Stützglied nach Anspruch 1 bis 3,
**dadurch gekennzeichnet,**
**daß** das Stützglied (1) mit auf dessen abgesetzter Abstützfläche (13) angeordneten Beschlägen (21) zur Fixierung des zu arretierenden Bauteils (2) versehen ist.

5. Stützglied nach Anspruch 4,
**dadurch gekennzeichnet,**
**daß** der auf dem Stützglied (1) angeordneter Beschlag (21) als Federraste (22) ausgebildet ist, die mit einer in das zu arretierende Bauteil (2) eingesetzten metallischen Hülse (23) zusammenwirkt.

6. Stützglied nach Anspruch 5,
**dadurch gekennzeichnet,**
**daß** die Federraste (22) und die Hülse (23) jeweils etwa in der Mitte des zu arretierenden Bauteils (2) in das Stützglied (1) sowie in das Bauteil (2) eingesetzt sind.
